# EUROPEAN PATENT APPLICATION

(11) **EP 3 133 896 A1**
(43) Date of publication of application: **22.02.2017**
(21) Application number: 15779871.1
(22) Date of filing: 07.04.2015
(51) Int. Cl.: H04W 92/18, H04W 8/14, H04W 16/14, H04W 72/04

(54) **COMMUNICATION CONTROL METHOD, RADIO COMMUNICATION DEVICE, AND RESOURCE MANAGEMENT DEVICE**

(30) Priority: 16.04.2014 JP 2014084852
(71) Applicant: Kyocera Corporation, Kyoto-shi, Kyoto 612-8501 (JP)
(72) Inventor: FUKUTA, Noriyoshi, Kyoto-shi Kyoto 612-8501 (JP); SAIWAI, Takahiro, Kyoto-shi Kyoto 612-8501 (JP)
(74) Representative: Schwabe - Sandmair - Marx
(86) International application number: PCT/JP2015/060806
(87) International publication number: WO 2015/159756

(57) **Abstract**

An LTE system includes an eNB 200-2 configured to support D2D communication which is one of LTE communication schemes and in which communication is directly performed between proximal devices, and an eNB 200-1 included in an LTE network. A communication control method includes: a step S11 of requesting, by the eNB 200-2, an allocation of a D2D communication resource to the eNB 200-1; a step S12 of allocating, by the eNB 200-1, on the basis of the request from the eNB 200-2, the D2D communication resource from a specific frequency band shared by a plurality of mobile network operators or a plurality of communication systems, to the eNB 200-2; and a step S16 of performing, by the eNB 200-2, the D2D communication by using the D2D communication resource allocated from the eNB 200-1.

## Description

### TECHNICAL FIELD

The present invention relates to a communication control method, a radio communication apparatus, and a resource management apparatus used in a mobile communication system.

### BACKGROUND ART

In 3GPP (3rd Generation Partnership Project), which is a project aiming to standardize a mobile communication system, specifications are being designed to enhance LTE (Long Term Evolution) in order to comply with the rapidly increasing traffic demands (for example, see Non Patent Document 1).

On the other hand, attention is paid to a specific frequency band that is shared by a plurality of mobile network operators or a plurality of communication systems. Such a specific frequency band includes, for example, an "unlicensed band" and a "licensed shared band".

Here, an unlicensed band is a frequency band that can be used without a license. A licensed shared band is a frequency band allocated for a user having one purpose (called "primary user of a frequency"); however, depending on geographical conditions or technical conditions, a licensed shared band is available for a user having another purpose (called "secondary user of a frequency").

### PRIOR ART DOCUMENT

### NON-PATENT DOCUMENT

Non Patent Document 1: 3GPP Technical specification "TS 36. 300 V12. 0. 1" March, 2014

### SUMMARY OF INVENTION

A communication control method according to an embodiment is used in a mobile communication system including: a radio communication apparatus configured to support D2D communication which is one mobile communication scheme and in which communication is directly performed between proximal devices; and a resource management apparatus included in a mobile network. The method comprises the steps of: (A) requesting, by the radio communication apparatus, an allocation of a D2D communication resource that is a radio resource available for the D2D communication, to the resource management apparatus; (B) allocating, by the resource management apparatus, on the basis of the request from the radio communication apparatus, the D2D communication resource from a specific frequency band shared by a plurality of mobile network operators or a plurality of communication systems, to the radio communication apparatus; and (C) performing, by the radio communication apparatus, the D2D communication by using the D2D communication resource allocated from the resource management apparatus.

A radio communication apparatus according to an embodiment is configured to support D2D communication which is one mobile communication scheme and in which communication is directly performed between proximal devices. The apparatus comprises: a controller configured to request an allocation of a D2D communication resource that is a radio resource available for the D2D communication, to a resource management apparatus included in a mobile network. The radio communication apparatus is allocated with the D2D communication resource from a specific frequency band shared by a plurality of mobile network operators or a plurality of communication systems, from the radio communication apparatus. The controller performs the D2D communication by using the D2D communication resource allocated from the resource management apparatus.

A resource management apparatus according to an embodiment is included in a mobile network. The apparatus comprises: a receiver configured to receive a request for allocation of a D2D communication resource that is a radio resource available for D2D communication, from a radio communication apparatus configured to support the D2D communication which is one mobile communication scheme and in which communication is directly performed between proximal devices; and a controller configured to allocate, on the basis of the request, the D2D communication resource from a specific frequency band shared by a plurality of mobile network operators or a plurality of communication systems, to the radio communication apparatus.

### BRIEF DESCRIPTION OF DRAWINGS

Fig. 1 is a configuration diagram of an LTE system according to a first embodiment and a second embodiment.
Fig. 2 is a block diagram of a UE according to the first embodiment and the second embodiment.
Fig. 3 is a block diagram of an eNB according to the first embodiment and the second embodiment.
Fig. 4 is a protocol stack diagram of a radio interface according to the first embodiment and the second embodiment.
Fig. 5 is a configuration diagram of a radio frame according to the first embodiment and the second embodiment.
Fig. 6 is a diagram illustrating an application scenario of an LTE system according to the first embodiment.
Fig. 7 is a sequence diagram illustrating a communication control method according to the first embodiment.
Fig. 8 is a sequence diagram illustrating a modification of a second embodiment.

### DESCRIPTION OF EMBODIMENTS

### [Overview of Embodiments]

A communication control method according to first and second embodiments is used in a mobile communication system including: a radio communication apparatus configured to support D2D communication which is one mobile communication scheme and in which communication is directly performed between proximal devices; and a resource management apparatus included in a mobile network. The method comprises the steps of: (A) requesting, by the radio communication apparatus, an allocation of a D2D communication resource that is a radio resource available for the D2D communication, to the resource management apparatus; (B) allocating, by the resource management apparatus, on the basis of the request from the radio communication apparatus, the D2D communication resource from a specific frequency band shared by a plurality of mobile network operators or a plurality of communication systems, to the radio communication apparatus; and (C) performing, by the radio communication apparatus, the D2D communication by using the D2D communication resource allocated from the resource management apparatus.

In the first and second embodiments, the resource management apparatus is a base station included in the mobile network.

In the first embodiment, the radio communication apparatus is a base station configured to support the D2D communication, and performs communication with the resource management apparatus via a backhaul link.

In the second embodiment, the radio communication apparatus is a base station having a function of a user terminal, is registered in the mobile network as the user terminal, and performs communication with the resource management apparatus via a radio link.

Alternatively, in the second embodiment, the radio communication apparatus is a user terminal having a scheduling function in the D2D communication, and performs communication with the resource management apparatus via a radio link.

In the first and second embodiments, the D2D communication resource is a radio resource used in common for transmission of D2D communication data corresponding to user data and transmission of D2D control information necessary for controlling the D2D communication. The step (C) comprises transmitting the D2D communication data and the D2D control information by using the D2D communication resource allocated from the resource management apparatus.

Alternatively, in the first and second embodiments, a correspondence relationship between the D2D communication resource and the D2D control resource is previously defined. The step (C) comprises the steps of: transmitting D2D communication data corresponding to user data by using the D2D communication resource allocated from the resource management apparatus; and transmitting D2D control information necessary for controlling the D2D communication by using the D2D control resource corresponding to the D2D communication resource allocated from the resource management apparatus.

Alternatively, in the first and second embodiments, in the step (B), the resource management apparatus allocates not only the D2D communication resource but also the D2D control resource to the radio communication apparatus. The step (C) comprises the steps of: transmitting D2D communication data corresponding to user data by using the D2D communication resource allocated from the resource management apparatus; and transmitting D2D control information for controlling the D2D communication by using the D2D control resource allocated from the resource management apparatus.

In the first and second embodiments, the (C) comprises the steps of: transmitting, by the radio communication apparatus, at the time of starting the D2D communication, configuration information for configuring transmission of a D2D reference signal necessary for a channel estimation in the D2D communication, to a user terminal configured to perform the D2D communication with the radio communication apparatus; transmitting, by the user terminal, the D2D reference signal to the radio communication apparatus, on the basis of the configuration information; and performing, by the radio communication apparatus, scheduling for the user terminal, on the basis of the D2D reference signal.

In the first and second embodiments, the step (C) comprises the steps of: transmitting, by the radio communication apparatus, at the time of starting the D2D communication, configuration information for configuring transmission of a D2D buffer state report indicating a transmission buffer state in the D2D communication, to a user terminal configured to perform the D2D communication with the radio communication apparatus; transmitting, by the user terminal, the D2D buffer state report to the radio communication apparatus, on the basis of the configuration information; and performing, by the radio communication apparatus, scheduling for the user terminal on the basis of the D2D buffer state report.

In the first and second embodiments, the communication control method further comprises the steps of: (D) requesting, by the resource management apparatus, a report of a D2D communication parameter relating to a status of the D2D communication, to the radio communication apparatus; and (E) reporting, by the radio communication apparatus, the D2D communication parameter to the resource management apparatus, in response to the request from the resource management apparatus. The D2D communication parameter includes at least one of: D2D control information necessary for controlling the D2D communication; interference information in a specific radio resource; and information on a channel estimation in the D2D communication.

In the first and second embodiments, the interference information includes resource identification information indicating the specific radio resource and interference level information indicating an interference level.

In the first and second embodiments, in the step (D), the resource management apparatus requests a periodic report of the D2D communication parameter, to the radio communication apparatus. In the step (E), the radio communication apparatus periodically reports the D2D communication parameter to the resource management apparatus.

Alternatively, in the first and second embodiments, in the step (D), the resource management apparatus requests a non-periodic report of the D2D communication parameter to the radio communication apparatus and notifies the radio communication apparatus of a threshold value defining a condition in which the D2D communication parameter is reported. In the step (E), the radio communication apparatus non-periodically reports, on the basis of the threshold value, the D2D communication parameter to the resource management apparatus.

A radio communication apparatus according to first and second embodiments is configured to support D2D communication which is one mobile communication scheme and in which communication is directly performed between proximal devices. The apparatus comprises: a controller configured to request an allocation of a D2D communication resource that is a radio resource available for the D2D communication, to a resource management apparatus included in a mobile network. The radio communication apparatus is allocated with the D2D communication resource from a specific frequency band shared by a plurality of mobile network operators or a plurality of communication systems, from the radio communication apparatus. The controller performs the D2D communication by using the D2D communication resource allocated from the resource management apparatus.

A resource management apparatus according to first and second embodiments is included in a mobile network. The apparatus comprises: a receiver configured to receive a request for allocation of a D2D communication resource that is a radio resource available for D2D communication, from a radio communication apparatus configured to support the D2D communication which is one mobile communication scheme and in which communication is directly performed between proximal devices; and a controller configured to allocate, on the basis of the request, the D2D communication resource from a specific frequency band shared by a plurality of mobile network operators or a plurality of communication systems, to the radio communication apparatus.

### [First Embodiment]

An embodiment will be described, below, where the present invention is applied to an LTE system that is a mobile communication system based on the 3GPP standards.

### (1) LTE system

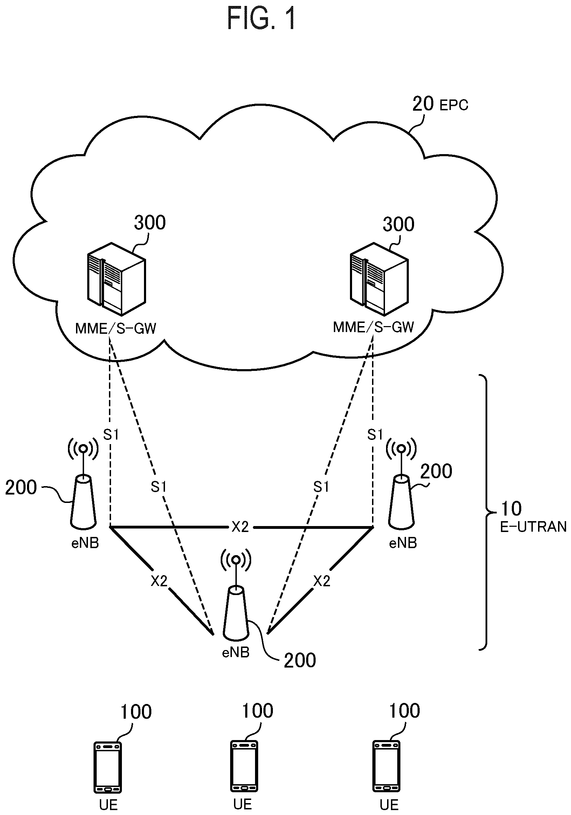

Fig. 1 is a configuration diagram of the LTE system according to the first embodiment.

As illustrated in Fig. 1, the LTE system according to the first embodiment has an UE (User Equipment) 100, an E-UTRAN (Evolved-UMTS Terrestrial Radio Access Network) 10, and an EPC (Evolved Packet Core) 20.

The UE 100 corresponds to a user terminal. The UE 100 is a mobile communication apparatus, which performs radio communication with a cell (a serving cell). The configuration of the UE 100 will be described later.

The E-UTRAN 10 corresponds to a radio access network. The E-UTRAN 10 includes a plurality of eNBs (evolved Node-Bs) 200. The eNB 200 corresponds to a base station. The eNB 200 is connected mutually via an X2 interface. The configuration of the eNB 200 will be described later.

The eNB 200 manages one or a plurality of cells, and performs radio communication with the UE 100 which establishes a connection with a cell of the eNB 200. The eNB 200 has a radio resource management (RRM) function, a routing function of user data, a measurement control function for mobility control and scheduling, and the like. The "cell" is used as a term indicating a smallest unit of a radio communication area, and is also used as a term indicating a function of performing radio communication with the UE 100.

The EPC 20 corresponds to a core network. The EPC 20 includes an MME (Mobility Management Entity)/S-GW (Serving-Gateway) 300. The MME performs various types of mobility control and the like for the UE 100. The SGW performs transfer control of the user data. The MME/S-GW 300 is connected to the eNB 200 via an S1 interface.

A network of the LTE system (hereinafter called "LTE network") is configured by the E-UTRAN 10 and the EPC 20. The LTE network corresponds to a mobile network.

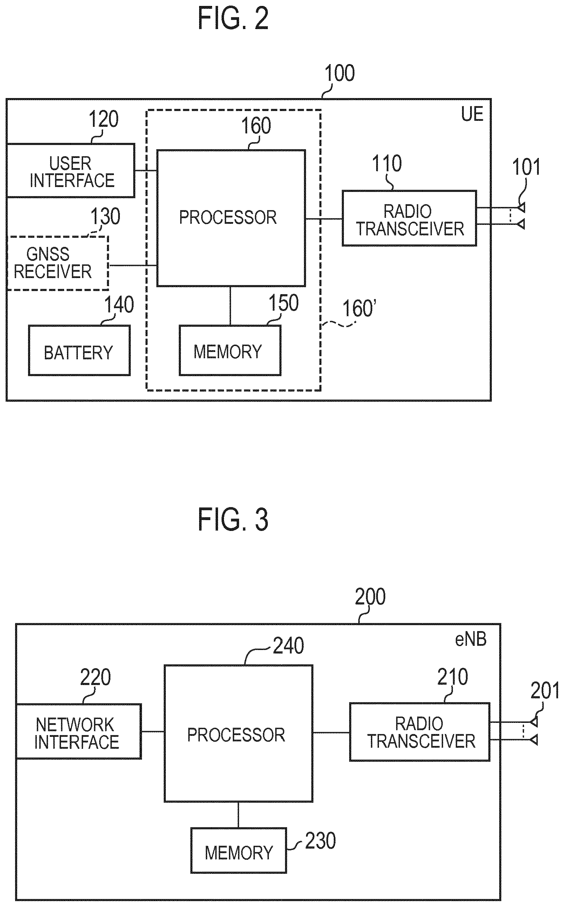

Fig. 2 is a block diagram of the UE 100. As illustrated in Fig. 2, the UE 100 has a plurality of antennas 101, a radio transceiver 110, a user interface 120, a GNSS (Global Navigation Satellite System) receiver unit 130, a battery 140, a memory 150, and a processor 160. The memory 150 and the processor 160 configure a controller. The UE 100 may not include the GNSS receiver unit 130. Furthermore, the memory 150 may be integrally formed with the processor 160, and this set (that is, a chip set) may be called a processor 160'.

The antenna 101 and the radio transceiver 110 are used to transmit and receive a radio signal. The radio transceiver 110 converts a baseband signal (transmission signal) output from the processor 160 into a radio signal, and transmits the radio signal from the antenna 101. Furthermore, the radio transceiver 110 converts a radio signal received by the antenna 101 into a baseband signal (reception signal), and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160. The GNSS receiver unit 130 receives a GNSS signal in order to obtain location information indicating a geographical location of the UE 100, and outputs the received signal to the processor 160. The battery 140 accumulates power to be supplied to each block of the UE 100.

The memory 150 stores a program to be executed by the processor 160 and information to be used for a process by the processor 160. The processor 160 includes a baseband processor that performs modulation and demodulation, coding and decoding, and the like on the baseband signal, and a CPU (Central Processing Unit) that performs various types of processes by executing the program stored in the memory 150. The processor 160 may further include a codec that performs encoding and decoding on sound and video signals. The processor 160 executes various types of processes and various types of communication protocols described later.

Fig. 3 is a block diagram of the eNB 200. As illustrated in Fig. 3, the eNB 200 has a plurality of antennas 201, a radio transceiver 210, a network interface 220, a memory 230, and a processor 240. The memory 230 and the processor 240 configure a controller. Furthermore, the memory 230 may be integrally formed with the processor 240, and this set (that is, a chipset) may be called a processor.

The antenna 201 and the radio transceiver 210 are used to transmit and receive the radio signal. The radio transceiver 210 converts a baseband signal (transmission signal) output from the processor 240 into a radio signal, and transmits the radio signal from the antenna 201. Furthermore, the radio transceiver 210 converts a radio signal received by the antenna 201 into a baseband signal (reception signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes a baseband processor that performs modulation and demodulation, coding and decoding, and the like on the baseband signal, and a CPU that performs various types of processes by executing the program stored in the memory 230. The processor 240 executes various types of processes and various types of communication protocols described later.

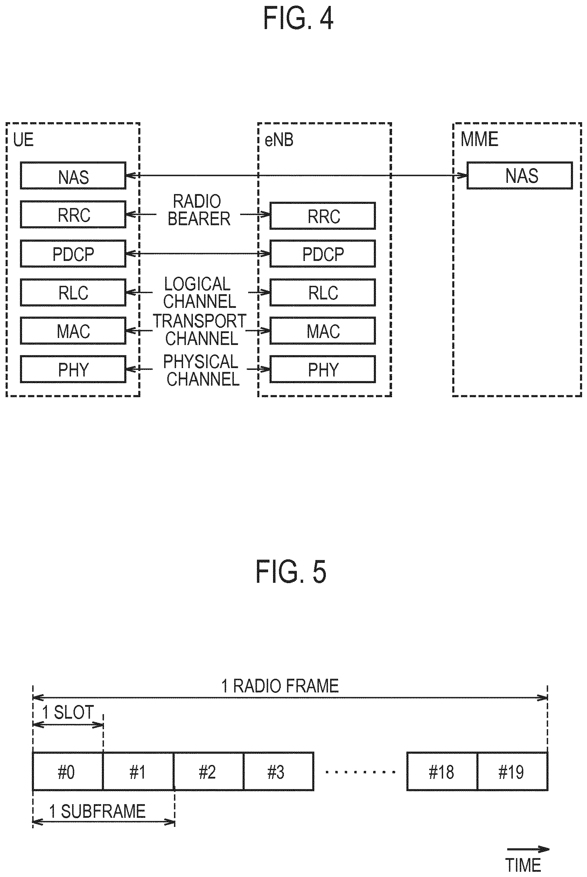

Fig. 4 is a protocol stack diagram of a radio interface in the LTE system. As illustrated in Fig. 4, the radio interface protocol is classified into a first layer to a third layer of an OSI reference model, such that the first layer is a physical (PHY) layer. The second layer includes a MAC (Medium Access Control) layer, an RLC (Radio Link Control) layer, and a PDCP (Packet Data Convergence Protocol) layer. The third layer includes an RRC (Radio Resource Control) layer.

The physical layer performs coding and decoding, modulation and demodulation, antenna mapping and demapping, and resource mapping and demapping. Between the physical layer of the UE 100 and the physical layer of the eNB 200, user data and control information are sent via a physical channel.

The MAC layer performs priority control of data, a retransmission process and the like by a hybrid ARQ (HARQ). Between the MAC layer of the UE 100 and the MAC layer of the eNB 200, user data and control information are sent via a transport channel. The MAC layer of the eNB 200 includes a scheduler for deciding a transport format (a transport block size and a modulation and coding scheme) of an uplink and a downlink, and a resource block to be allocated to the UE 100.

The RLC layer sends data to an RLC layer of a reception side by using the functions of the MAC layer and the physical layer. Between the RLC layer of the UE 100 and the RLC layer of the eNB 200, user data and control information are sent via a logical channel.

The PDCP layer performs header compression and decompression, and encryption and decryption.

The RRC layer is defined only in a control plane that handles control information. Between the RRC layer of the UE 100 and the RRC layer of the eNB 200, control information (an RRC message) for various types of configurations is sent. The RRC layer controls a logical channel, a transport channel, and a physical channel according to the establishment, re-establishment, and release of a radio bearer. When there is an RRC connection between the RRC of the UE 100 and the RRC of the eNB 200, the UE 100 is in an RRC connected state, and otherwise, the UE 100 is in an RRC idle state.

An NAS (Non-Access Stratum) layer positioned above the RRC layer performs session management, mobility management, and the like.

Fig. 5 is a configuration diagram of a radio frame used in the LTE system. In the LTE system, OFDMA (Orthogonal Frequency Division Multiple Access) is applied to a downlink (DL), and SC-FDMA (Single Carrier Frequency Division Multiple Access) is applied to an uplink (UL), respectively.

As illustrated in Fig. 5, a radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each of the resource blocks includes a plurality of subcarriers in the frequency direction. A resource element is configured by one subcarrier and one symbol. Of the radio resources allocated to the UE 100, a frequency resource is configured by a resource block, and a time resource is configured by a subframe (or a slot).

### (2) Application scenario

An application scenario of an LTE system according to the first embodiment will be described below. In the first embodiment, a specific frequency band is used in LTE communication (mobile communication).

The specific frequency band is a frequency band that is shared by a plurality of mobile network operators or a plurality of communication systems. In other words, the specific frequency band is a frequency band that cannot be occupied by one mobile network operator.

Among specific frequency bands, a licensed shared band is a frequency band that is allocated for a primary user of a frequency; however, depending on geographical conditions or technical conditions, a licensed shared band is a frequency band that can also be used by a secondary user.

When a case is assumed in which a specific frequency band is a licensed shared band, for example, in a specific frequency band, a user of a television broadcast corresponds to the primary user, and a user of LTE communication corresponds to the secondary user. The primary user uses a specific frequency band for an application (purpose) for which a license has been granted. That is, it is defined that the primary user is given priority over the second user for the use of the specific frequency band.

In this way, the specific frequency band is a frequency band that does not allow the primary use of a frequency by an LTE network operator (hereinafter, called an "operator"), and that cannot be occupied by one operator.

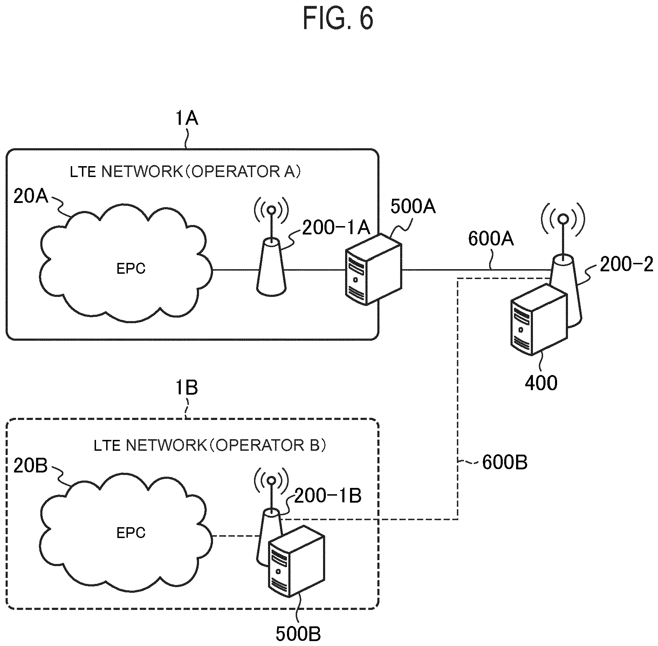

Fig. 6 is a diagram illustrating an application scenario of the LTE system according to the first embodiment.

As illustrated in Fig. 6, in an application scenario 1, the LTE system has an LTE network 1A of an operator A and an eNB 200-2. The eNB 200-2 may be operated by an operator 2. The LTE network 1A includes an eNB 200-1A and an EPC 20A. In the first embodiment, the eNB 200-1A corresponds to a resource management apparatus included in a mobile network.

The eNB 200-2 performs LTE communication in the specific frequency band. The eNB 200-2 supports D2D (Device to Device) communication that is one of the LTE communication schemes and in which direct communication is performed between proximal devices. The eNB 200-2 corresponds to a radio communication apparatus that supports D2D communication. A general D2D communication is applied to direct communication between the UEs 100; however, in the first embodiment, a special eNB 200 that supports D2D communication is assumed.

The eNB 200-2 performs backhaul communication with the eNB 200-1A via an inter-eNB interface 600A that is a backhaul link. The inter-eNB interface 600A is an X2 interface, for example.

Further, the LTE system according to the application scenario 1 has an interface controller 400 provided outside the LTE network 1A. The interface controller 400 establishes a communication path between the interface controller 400 and the LTE network 1, which is used as the inter-eNB interface 600. The communication path, for example, is a VPN (Virtual Private Network). In the first embodiment, the interface controller 400 is provided inside the eNB 200-2. However, the interface controller 400 may be provided outside the eNB 200-2, and may be connected to the eNB 200-2.

The LTE network 1A has a gateway 500A that functions as a connection point between the eNB 200-2 and the LTE network 1A. Fig. 6 illustrates a case, as an example, in which the gateway 500A is provided outside the eNB 200-1A.

In such the application scenario 1, the eNB 200-2 performs the LTE communication in the specific frequency band, under the control of the eNB 200-1A.

In an application scenario 2, the eNB 200-2 is shared with a plurality of operators (operators A and B). The eNB 200-2 is, for example, operated by a company or an organization that is independent of the operators A and B (a so-called third party), or a collaborative company of the operators A and B (a so-called joint venture).

In the application scenario 2, the eNB 200-2 performs backhaul communication with an eNB 200-1B set up in an LTE network 1B of the operator B, via an inter-eNB interface 600B. The inter-eNB interface 600B is an X2 interface, for example. The LTE network 1B has a gateway 500B that functions as a connection point between the eNB 200-2 and the LTE network 1B. Fig. 6 illustrates a case, as an example, in which the gateway 500B is provided inside the eNB 200-1B.

As a scheduling method by which a plurality of operators (the operators A and B) share the eNB 200-2 (a specific frequency band), there are two methods as follows, for example.

The first scheduling method is a method in which a plurality of operators use the eNB 200-2 in a time division manner. For example, one subframe is allocated to one operator.

The second scheduling method is a method by which a different frequency resource is allocated to each operator while enabling a plurality of operators to simultaneously use the eNB 200-2. That is, frequency division of a specific frequency band is performed among a plurality of operators. In this case, a MAC scheduler that is shared by a plurality of operators (an integrated MAC scheduler) is provided in the eNB 200-2.

### (3) Communication control method

A communication control method according to the first embodiment will be described, below. The communication control method according to the first embodiment is used in the above-described application scenarios.

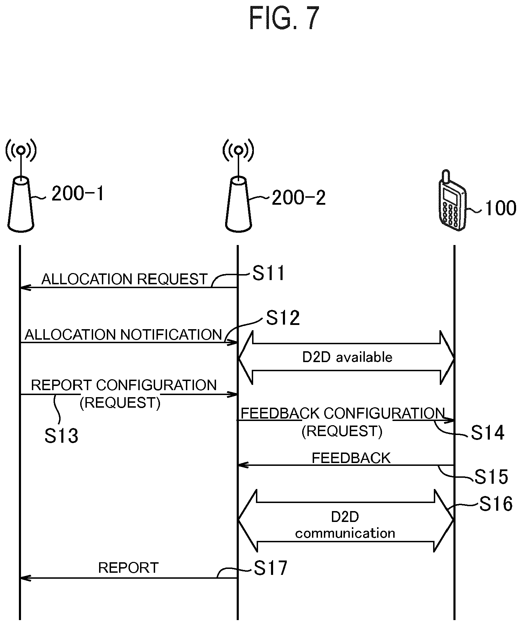

Fig. 7 is a sequence diagram illustrating a communication control method according to the first embodiment. The eNB 200-1 is included in the LTE network 1. The eNB 200-2 supports D2D communication that is one of the LTE communication schemes and in which direct communication is performed between proximal devices. Further, the eNB 200-2 performs backhaul communication with the eNB 200-1 via a backhaul link (inter-eNB interface 600).

Firstly, the eNB 200-2 discovers, by a proximal UE discovery (Discovery) procedure, a UE 100 in the proximity of the eNB 200-2 and determines to start the D2D communication with the UE 100.

As illustrated in Fig. 7, in step S11, the eNB 200-2 transmits allocation request information requesting to allocate a D2D communication resource that is a radio resource available for the D2D communication, to the eNB 200-1. The allocation request information may include frequency band information indicating a specific frequency band.

In step S12, the eNB 200-1 allocates, on the basis of the request from the eNB 200-2, a D2D communication resource from the specific frequency band, to the eNB 200-2. The D2D communication resource is configured by a time resource and a frequency resource. The eNB 200-1 transmits allocation notification information indicating the allocated D2D communication resource, to the eNB 200-2.

The allocation notification information includes at least one of: time resource information (one or a plurality of subframes) indicating a time resource and frequency resource information (one or a plurality of resource blocks) indicating a frequency resource. The allocation notification information may include frequency band information indicating a specific frequency band. The allocation notification information may include valid period information indicating a valid period of the allocation. Steps S11 and S12 may be repeatedly performed in a D2D communication period.

When receiving the allocation of the D2D communication resource from the eNB 200-1, the eNB 200-2 is in a state of being capable of the D2D communication with the UE 100. In the D2D communication (step S16), D2D communication data that corresponds to user data and D2D control information that is required for controlling the D2D communication are exchanged. Examples of the D2D control information include scheduling information, HARQ, ACK/NACK, channel state information (CSI), a buffer state report (BSR), and a power head room (PHR).

A resource utilization method for exchanging the D2D control information in the D2D communication includes the following two patterns.

In a pattern 1, the D2D communication resource is used both for transmitting the D2D communication data and transmitting the D2D control information. That is, the D2D control information is transmitted through a piggyback of the D2D communication data. Alternatively, when an information amount of the D2D control information is large, the D2D control information may be individually transmitted.

In a pattern 2, in addition to the D2D communication resource, a D2D control resource for exchanging the D2D control information is utilized. The D2D control resource is configured by a time resource and a frequency resource. In the pattern 2, there are two sub patterns as follows:

In a pattern 2-1, the D2D control resource is implicitly allocated. Specifically, a correspondence relationship (resource positional relationship) between the D2D communication resource and the D2D control resource is previously defined. On the basis of a frequency resource (bandwidth) or the like configuring the D2D communication resource, the D2D control resource is uniquely specified.

In a pattern 2-2, the D2D control resource is expressly allocated. Specifically, the eNB 200-1 allocates not only the D2D communication resource but also the D2D control resource to the eNB 200-2. For example, in step S12, the eNB 200-1 includes information indicating the D2D control resource, into the allocation notification information.

In step S13, the eNB 200-1 transmits a report request requesting (configuring) a report of a D2D communication parameter related to a status of the D2D communication, to the eNB 200-2. Step S13 may be performed simultaneously with step S12.

The eNB 200-1 requests a periodic report of the D2D communication parameter, to the eNB 200-2. Alternatively, the eNB 200-1 may request a non-periodic report of the D2D communication parameter to the eNB 200-2, and at the same time, may notify the eNB 200-2 of a threshold value defining a condition in which the D2D communication parameter is reported.

The D2D communication parameter includes at least one of: the D2D control information, interference information in a specific radio resource, and information on a channel estimation in the D2D communication. The interference information includes resource identification information indicating the specific radio resource (subframe information, resource block information, and the like), and interference level information indicating an interference level. The specific radio resource is a radio resource allocated from the eNB 200-2 to the UE 100 or another radio resource. The channel estimation information is information obtained by using a D2D reference signal described later. When these D2D communication parameters are reported from the eNB 200-2 to the eNB 200-1, the eNB 200-1 is capable of comprehending a communication state in the specific frequency band.

In step S 14, the eNB 200-2 transmits configuration information for configuring (requesting) a transmission of the D2D reference signal necessary for the channel estimation in the D2D communication, to the UE 100. The configuration information may include information indicating a radio resource allocated to the transmission of the D2D reference signal. Further, the configuration information may include information indicating the number of times of repeated transmissions (Repetitions) of the D2D reference signal. Moreover, the eNB 200-2 may transmit configuration information for configuring (requesting) of a transmission of the D2D buffer state report (BSR) indicating a transmission buffer in the D2D communication, to the UE 100. Hereinafter, the D2D reference signal and the D2D BSR are simply called "feedback information".

Thus, the eNB 200-2 configures the transmission of the feedback information to the UE 100 at the time of starting the D2D communication. The eNB 200-2 preferably transmits, after receiving the allocation of the D2D communication resource from the eNB 200-1, the feedback configuration information to the UE 100 by an initial transmission for the UE 100.

In step S15, the UE 100 transmits, on the basis of the feedback configuration information, the feedback information (D2D reference signal, D2D BSR) to the eNB 200-2. The eNB 200-2 performs, on the basis of the feedback information received from the UE 100, scheduling for the UE 100. Specifically, the eNB 200-2 determines an appropriate radio resource to be allocated to the UE 100, from the D2D communication resources allocated from the eNB 200-1. Further, the eNB 200-2 may perform a determination of a modulation and coding scheme (MCS) in the D2D communication, for example.

In step S16, the eNB 200-2 performs the D2D communication with the UE 100. In the above-described pattern 1, the eNB 200-2 uses the D2D communication resource to transmit the D2D communication data and the D2D control information to the UE 100. The D2D control information includes the scheduling information, the HARQ ACK/NACK, and the like. In the above-described pattern 2, the eNB 200-2 uses the D2D communication resource to transmit the D2D communication data and uses the D2D control resource to transmit the D2D control information.

The eNB 200-2 acquires (measures) the D2D communication parameter when performing the D2D communication with the UE 100. As described above, the D2D communication parameter includes at least one of: the D2D control information, interference information in a specific radio resource, and information on a channel estimation in the D2D communication.

In step S17, the eNB 200-2 transmits the report information including the D2D communication parameter to the eNB 200-1, in response the request (step S13) from the end 200-1. When there is a request for a periodic report, the eNB 200-2 periodically transmits the report information to the eNB 200-1. On the other hand, when there is a request for a non-periodic report, the eNB 200-2 non-periodically transmits the report information, on the basis of the threshold value notified from the eNB 200-1, to the eNB 200-1.

The eNB 200-1 may determine, on the basis of the report information, to stop the utilization of the currently allocated D2D communication resource and instruct the eNB 200-2 with an indication to that effect. The eNB 200-1 may update, on the basis of the report information, the D2D communication resource to be allocated, and may notify the eNB 200-2 of the D2D communication resource that has been updated.

### (4) Conclusion

The communication control method according to the first embodiment includes: step S11 of requesting, by the eNB 200-2, the allocation of the D2D communication resource to the eNB 200-1; the step S12 of allocating, by the eNB 200-1, on the basis of the request from the eNB 200-2, the D2D communication resource from the specific frequency band, to the eNB 200-2; and the step S16 of performing, by the eNB 200-2, the D2D communication by using the D2D communication resource allocated from the eNB 200-1.

Thus, the eNB 200-1 manages the resource allocation in the specific frequency band. Further, the D2D communication has a limited communication range. Thus, when the eNB 200-1 appropriately allocates the D2D communication resource from the specific frequency band to the eNB 200-2, it is possible to utilize the specific frequency band for the LTE communication while avoiding interference with a primary user.

### [Modification of first embodiment]

The above-described first embodiment indicates a case, as an example, in which the resource management apparatus configured to manage the resource allocation in the specific frequency band is the eNB 200-1.

However, the resource management apparatus may be an apparatus other than the eNB 200-1. For example, the resource management apparatus may be an apparatus other than an eNB included in the RAN. Alternatively, the resource management apparatus may be an apparatus included in the core network (EPC 20). An example of a case where the resource management apparatus is included in the core network (EPC 20) includes a case where the resource management apparatus is an Operation, Administration and Maintenance (OAM) apparatus. In this case, when the eNB 200-1 in Fig. 7 is replaced by the OAM, it is possible to apply the flow in Fig. 7.

### [Second Embodiment]

A second embodiment will be described while focusing on a difference from the first embodiment, below.

In the above-described first embodiment, the eNB 200-2 (radio communication apparatus) performs the communication with the eNB 200-1 (resource management apparatus) via a backhaul link.

On the other hand, in the second embodiment, the eNB 200-2 performs communication with the eNB 200-1 via a radio link (radio interface). That is, the eNB 200-2 according to the second embodiment is a special eNB 200 having a function of the UE 100, and is registered as the UE 100 in the LTE network 1. As seen from the eNB 200-1, the eNB 200-2 is thought of as the UE 100. In this case, in the flow in Fig. 7, a step of connecting, by the eNB 200-2, to the eNB 200-1 is needed before step S11. Other than this, the flow in Fig. 7 may be applied as is.

Alternatively, in the second embodiment, instead of the eNB 200-2, the UE 100 (radio communication apparatus) having a scheduling function in the D2D communication is used. Such a UE 100 may be called a cluster head UE. In this case, when the eNB 200-2 in Fig. 7 is replaced by the cluster head UE, it is possible to apply the flow in Fig. 7. However, in the flow in Fig. 7, a step of connecting, by the cluster head UE, to the eNB 200-1 is needed before step S11.

### [Modification of second embodiment]

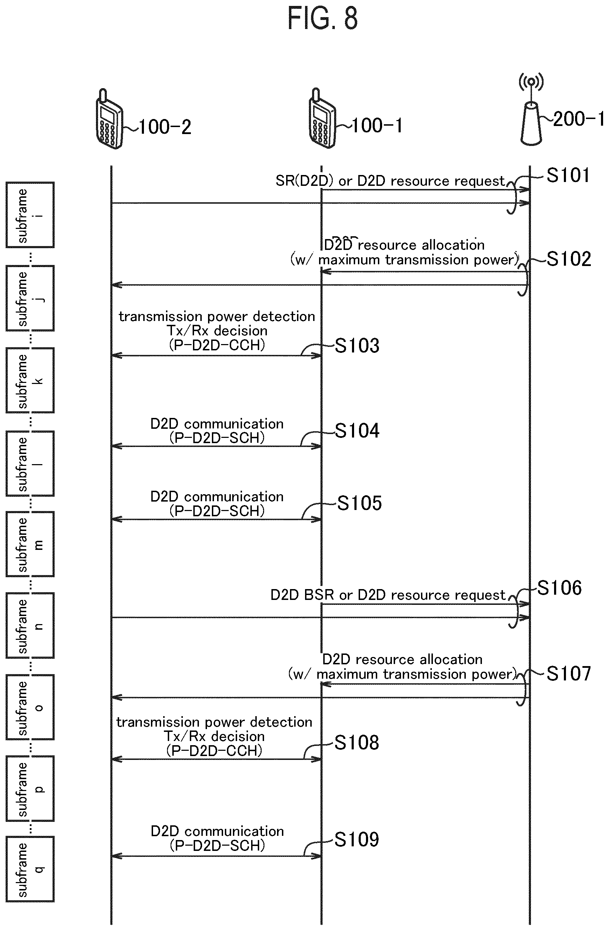

In the second embodiment, a dynamic D2D communication resource such as a subframe unit may be allocated by the eNB 200-1. Fig. 8 is a sequence diagram illustrating a modification of the second embodiment. In Fig. 8, the UE 100-1 and the UE 100-2 are connected, in a coverage of the eNB 200-1, to the eNB 200-1.

As illustrated in Fig. 8, in step S101, the UE 100-1 and the UE 100-2 transmit the allocation request information requesting an allocation of a D2D communication resource, to the eNB 200-1.

In step S102, the eNB 200-1 allocates, on the basis of the request from the UE 100-1 and the UE 100-2, the D2D communication resource from the specific frequency band. The eNB 200-1 transmits allocation notification information indicating the allocated D2D communication resource, to the UE 100-1 and the UE 100-2. The allocation notification information may include power information indicating a maximum transmission power of the D2D communication.

In step S103, the UE 100-1 transmits the D2D control information and receives the D2D control information transmitted from the UE 100-2. The UE 100-2 transmits the D2D control information and receives the D2D control information transmitted from the UE 100-1.

At that time, the UE 100-1 and the UE 100-2 perform an operation of determining a transmission power used for the D2D communication (Transmission power detection). For example, the reference signal for the D2D is used to determine the transmission power used for the D2D communication. Further, the UE 100-1 and the UE 100-2 perform an operation of determining a transmission side/reception side (Tx/Rx decision) in the D2D communication. For example, a buffer state or the like is referred to to determine which is to transmit. It is noted that the transmission side/reception side may not be alternated in an assigned unit time, and the transmission side/reception side may be switched in a subframe unit or in a predetermined pattern.

In step S104 and step S105, the D2D communication data is transmitted from one of the UE 100-1 and the UE 100-2 (transmission side) to the other (reception side) one.

The operations in step S106 and thereafter are similar to the operations in step S101 and thereafter.

### [Other Embodiments]

In the above-described first embodiment and second embodiment, a case in which the specific frequency band is a licensed shared band is described as an example. However, the specific frequency band may be an ISM (Industry-Science-Medical) band, such as the 2.4-GHz band; that is, the specific frequency band may be an unlicensed band.

Further, in the first embodiment and the second embodiment described above, although an LTE system is described as an example of a mobile communication system, the present invention is not limited to the LTE system, and may be applied to a mobile system other than the LTE system.

The entire contents of Japanese Patent Application No. 2014-084852 (filed on April 16, 2014) are incorporated herein by reference.

### INDUSTRIAL APPLICABILITY

The present invention is useful in the field of radio communication.

## Claims

1. A communication control method used in a mobile communication system including: a radio communication apparatus configured to support D2D communication which is one mobile communication scheme and in which communication is directly performed between proximal devices; and a resource management apparatus included in a mobile network, the method comprising the steps of:
(A) requesting, by the radio communication apparatus, an allocation of a D2D communication resource that is a radio resource available for the D2D communication, to the resource management apparatus;
(B) allocating, by the resource management apparatus, on the basis of the request from the radio communication apparatus, the D2D communication resource from a specific frequency band shared by a plurality of mobile network operators or a plurality of communication systems, to the radio communication apparatus; and
(C) performing, by the radio communication apparatus, the D2D communication by using the D2D communication resource allocated from the resource management apparatus.

2. The communication control method according to claim 1, wherein the resource management apparatus is a base station included in the mobile network.

3. The communication control method according to claim 1, wherein the radio communication apparatus is a base station configured to support the D2D communication, and performs communication with the resource management apparatus via a backhaul link.

4. The communication control method according to claim 1, wherein the radio communication apparatus is a base station having a function of a user terminal, is registered in the mobile network as the user terminal, and performs communication with the resource management apparatus via a radio link.

5. The communication control method according to claim 1, wherein the radio communication apparatus is a user terminal having a scheduling function in the D2D communication, and performs communication with the resource management apparatus via a radio link.

6. The communication control method according to claim 1, wherein the D2D communication resource is a radio resource used in common for transmission of D2D communication data corresponding to user data and transmission of D2D control information necessary for controlling the D2D communication, and
the step (C) comprises transmitting the D2D communication data and the D2D control information by using the D2D communication resource allocated from the resource management apparatus.

7. The communication control method according to claim 1, wherein a correspondence relationship between the D2D communication resource and the D2D control resource is previously defined, and
the step (C) comprises the steps of:
transmitting D2D communication data corresponding to user data by using the D2D communication resource allocated from the resource management apparatus; and
transmitting D2D control information necessary for controlling the D2D communication by using the D2D control resource corresponding to the D2D communication resource allocated from the resource management apparatus.

8. The communication control method according to claim 1, wherein in the step (B), the resource management apparatus allocates not only the D2D communication resource but also the D2D control resource to the radio communication apparatus, and
the step (C) comprises the steps of:
transmitting D2D communication data corresponding to user data by using the D2D communication resource allocated from the resource management apparatus; and
transmitting D2D control information for controlling the D2D communication by using the D2D control resource allocated from the resource management apparatus.

9. The communication control method according to claim 1, wherein the (C) comprises the steps of:
transmitting, by the radio communication apparatus, at the time of starting the D2D communication, configuration information for configuring transmission of a D2D reference signal necessary for a channel estimation in the D2D communication, to a user terminal configured to perform the D2D communication with the radio communication apparatus;
transmitting, by the user terminal, the D2D reference signal to the radio communication apparatus, on the basis of the configuration information; and
performing, by the radio communication apparatus, scheduling for the user terminal, on the basis of the D2D reference signal.

10. The communication control method according to claim 1, wherein the step (C) comprises the steps of:
transmitting, by the radio communication apparatus, at the time of starting the D2D communication, configuration information for configuring transmission of a D2D buffer state report indicating a transmission buffer state in the D2D communication, to a user terminal configured to perform the D2D communication with the radio communication apparatus;
transmitting, by the user terminal, the D2D buffer state report to the radio communication apparatus, on the basis of the configuration information; and
performing, by the radio communication apparatus, scheduling for the user terminal on the basis of the D2D buffer state report.

11. The communication control method according to claim 1, further comprising the steps of:
(D) requesting, by the resource management apparatus, a report of a D2D communication parameter relating to a status of the D2D communication, to the radio communication apparatus; and
(E) reporting, by the radio communication apparatus, the D2D communication parameter to the resource management apparatus, in response to the request from the resource management apparatus, wherein
the D2D communication parameter includes at least one of: D2D control information necessary for controlling the D2D communication; interference information in a specific radio resource; and information on a channel estimation in the D2D communication.

12. The communication control method according to claim 11, wherein the interference information includes resource identification information indicating the specific radio resource and interference level information indicating an interference level.

13. The communication control method according to claim 11, wherein in the step (D), the resource management apparatus requests a periodic report of the D2D communication parameter, to the radio communication apparatus, and
in the step (E), the radio communication apparatus periodically reports the D2D communication parameter to the resource management apparatus.

14. The communication control method according to claim 11, wherein in the step (D), the resource management apparatus requests a non-periodic report of the D2D communication parameter to the radio communication apparatus and notifies the radio communication apparatus of a threshold value defining a condition in which the D2D communication parameter is reported, and
in the step (E), the radio communication apparatus non-periodically reports, on the basis of the threshold value, the D2D communication parameter to the resource management apparatus.

15. A radio communication apparatus configured to support D2D communication which is one mobile communication scheme and in which communication is directly performed between proximal devices, the apparatus comprising:
a controller configured to request an allocation of a D2D communication resource that is a radio resource available for the D2D communication, to a resource management apparatus included in a mobile network, wherein
the radio communication apparatus is allocated with the D2D communication resource from a specific frequency band shared by a plurality of mobile network operators or a plurality of communication systems, from the radio communication apparatus, and
the controller performs the D2D communication by using the D2D communication resource allocated from the resource management apparatus.

16. A resource management apparatus included in a mobile network, comprising:
a receiver configured to receive a request for allocation of a D2D communication resource that is a radio resource available for D2D communication, from a radio communication apparatus configured to support the D2D communication which is one mobile communication scheme and in which communication is directly performed between proximal devices; and
a controller configured to allocate, on the basis of the request, the D2D communication resource from a specific frequency band shared by a plurality of mobile network operators or a plurality of communication systems, to the radio communication apparatus.
